# EUROPEAN PATENT APPLICATION

(11) **EP 1 271 317 A1**
(43) Date of publication of application: **02.01.2003**
(21) Application number: 01115915.9
(22) Date of filing: 29.06.2001
(51) Int. Cl.: G06F 11/14

(54) **System-on-chip with time redundancy operation**

(71) Applicant: Nagracard S.A., 1033 Cheseaux-sur-Lausanne (CH)
(72) Inventor: Osen, Karl, 1282 Dardagny (CH)
(74) Representative: Wenger, Joel-Théophile

(57) **Abstract**

This patent describes a fail-safe operating system for microprocessor based System-on-Chips, giving System-on-Chips considerable tolerance to intermittent failures. The problem this patent aims to solve is the vulnerability of current System-on-Chips when operating outside the normal working conditions. The goal of this patent is to make System-on-Chips much safer and robust than System-on-Chips with normal operating systems.

The above mentioned drawbacks are overcome with a System-on-Chip comprising an operating system designed to execute jobs in a sequential manner, each job having a set of input data/conditions and output data/conditions characterized in that, it comprises means to repeat jobs at least twice for each set of input data, and comparison means to validate the results from repeated jobs by checking the output data for equivalency, and means to continue the execution in case of successful comparison, and means to launch of an exception handler in case of unsuccessful comparison.

## Description

The present invention concerns an operating system running in a microprocessor based System-on-Chip (MbSoC), and in particular, an operating system having a certain degree of fault acceptance.

By "System-on-Chip", it is meant an electronic module packaged as a single chip, in which all the elements to achieve a particular function are integrated. An example of such a module is a self-contained GPS chip which encompass the analog and digital treatment to determine the x,y,z positions. This chip is then integrated in a host apparatus, e.g. a portable telephone. Another example of such a module is a smart card or SIM module, which integrates on a single substrate the input/output interface, the clock driver, the cryptographic module, the microprocessor with its volatile and non volatile memories.

By "Operating System", it is meant a central program/process managing a computer's resources and controlling the processes running in it. In a System-on-Chip the applications are often indistinguishable from the operating system kernel, and in the context of this patent the applications (code and data) are considered to be a part of the operating system.

This patent describes a fail-safe operating system for System-on-Chips, giving System-on-Chips considerable tolerance to intermittent failures. The problem this patent aims to solve is the vulnerability of current System-on-Chips when operating outside the normal working conditions. The goal of this patent is to make System-on-Chips much safer and robust than System-on-Chips with normal operating systems.

Today's System-on-Chips are programmed much like ordinary computers, i.e. they have a normal operating system. Usually a basic assumption of the software designer is that the microprocessor (CPU) will execute program instructions deterministically and reliably, and that memory will retain data without problems. Unfortunately, this basic assumption does not always hold, and a single instruction execution failure can possibly result in a major security breach or fatal destruction of the System-on-Chip's memory content. Whereas dangerous failures can occur for natural reasons, failures can also be intentionally provoked by hackers trying to break or bypass the security mechanisms of the System-on-Chip.

To make System-on-Chips better and safer, they can advantageously be equipped with a fail-safe operating system as described in this patent. A System-on-Chip can be considered fail-safe when most cases of instruction execution failures and data retention failures are detected and corrected, before said failures cause irreversible internal damage or compromise the security of the System-on-Chip or the overall system in which the System-on-Chip is being used.

Intermittent failures that should be successfully detected and handled by the operating system include but are not limited to:
- Instruction execution failures
- Memory read failures
- Memory write failures
- Memory data retention failures
- Register data retention failures
- Software corruptions
- Hardware failures
- Sensor failures

The reasons for these failures include but are not limited to:
- Bad System-on-Chip contacts (dirt, vibration, etc.)
- Power supply noise (glitch attacks, thunderstorms, etc.)
- Clock noise (glitch attacks, bad clock signal, etc.)
- Cosmic radiation (alpha particles, etc.)
- Design flaws (hardware and software)
- Manufacturing flaws
- Microprobing

Since the failure reasons and their causes are numerous and not all understood or maybe not even suspected, special techniques must be used to reliably detect failures and to take corrective action before harm is made.

The above mentioned drawbacks are overcome with a System-on-Chip comprising an operating system designed to execute jobs in a sequential manner, each job having a set of input data/conditions and output data/conditions characterized in that, it comprises means to repeat jobs at least twice for each set of input data, and comparison means to validate the results from repeated jobs by checking the output data for equivalency, and means to continue the execution in case of successful comparison, and means to launch of an exception handler in case of unsuccessful comparison.

By "jobs" it is meant the execution of a process or a partial process to perform functions such as computing an address, encrypt a block of data, read a database record, etc. The jobs in a process are executed sequentially. Unless specified the term Job usually designates an Unsafe Job.

By "unsafe jobs" it is meant jobs where failures are not inherently detectable by the job itself. For example, a pure encryption job is unsafe unless the program includes a subsequent decryption and makes sure the original clear text is obtained by said decryption.

By "process" it is meant the execution of a program with a certain data set. A process consists of one or more jobs, usually executed sequentially. The division of a process into jobs is done so that each job can be executed twice with the same data set for verification purposes.

In a preferred embodiment of the patent the operating system executes all jobs twice and compares the results. If the results are equivalent it can be assumed that both jobs have been able to finish without failures, and that consequently the results are valid. In case an even higher degree of confidence is required, jobs may be executed more than twice.

Instead of letting the operating system compare the results, it is also possible to let the next job execute this function, and let said job inform the operating system if the result is valid or not. This approach has the advantage of allowing the use of more sophisticated comparison and verification algorithms.

The term "equivalency" is used instead of "identical" when speaking about the comparison. In some cases, the results of the jobs are correct even if not identical. This is often the case when a measurement is performed (e.g. supply voltage) or when external criteria are determined (e.g. pulse width). A comparison based on a range is then applied.

In case identical results are required, a hashing value or cyclic redundancy check value (e.g. CRC-16 or CRC-32) of the job's output data is provided to the operating system for comparison, thus creating a signature on the output data. This method simplifies the comparison because the jobs' signature values are compact (e.g. 16 bits or 32 bits). The method may also reduce memory requirements considerably. Example: The first job scans a database and creates a long list of the physical addresses of all records, plus calculates a CRC-32 value from the addresses in said list as signature. For memory consumption reasons the second job does not save the physical addresses in a list, but only uses said addresses to compute the CRC-32. To check the correctness of the list created in the first job it is sufficient to check that the CRC-32 resulting from both jobs are identical. In case the CRC-32s are equal the list created in the first job is provided as an input to the next job.

A process consists of one or more jobs. In case a process performs database updates it may be necessary to divide the process into sub-processes or jobs, all said jobs being executed twice. By dividing the process into jobs it is possible to ensure that the repeatedly executed jobs work on identical or equivalent data, and hence produce equivalent results.

Executing a job more than once with the same data set is a method frequently used in life-critical applications such as aircraft fly-by-wire systems. However, in such systems the jobs run in parallel on 3 or 4 different computers, the goal being to survive a computer breakdown.

In System-on-Chips, multi-CPU chips are usually not practical. However, executing the same job twice is feasible, and is a new method that may increase a System-on-Chip's fault tolerance and hacker resistance by orders of magnitude.

As with fly-by-wire systems it may be considered advantageous to let the repeated jobs execute different programs, possibly developed by different programmers. In this case elusive software and hardware bugs can be detected.

Safe jobs are by definition self-verifying. These jobs do not need to be executed twice. The same is the case for unsafe jobs which are not life-critical to the System-on-Chip, such as the calculation of control words for a descrambling system.

Another way of verifying the result of an unsafe job is to let the second job be the inverse operation of the first job. In this case the output of the second job is compared with the input of the first job instead of its output.

When a job has been executed twice, the comparing of the results may either validate or invalidate the result. In case the result is validated, other jobs using said result as input may be launched. In case the result is invalid then exception handling is initiated.

The exception handling may be done in several ways, depending on the operational requirements and the threat environment. In a preferred embodiment of the invention the failures are logged in non-volatile memory for later use, such as for System-on-Chip reliability measurements, threat assessment, and hacker countermeasures. Furthermore, said non-volatile memory can advantageously be non-reversing or "one time programmable", preventing tampering by hackers.

In a preferred embodiment of the patent, the detection of failures will cause the restart of the job, said job being repeated until identical results have been obtained consecutively for a predefined number of repetitions. After a maximum number of retries, however, the job and the associated process(es) shall be aborted.

In a preferred embodiment of the patent, failure detection also takes place during each job execution, the correct progress of said execution being monitored at several places in the code. This monitoring can consist of, but is not limited to, the following verifications:
- Verifying that the stack pointer value is in a range of legal values. If the stack pointer value is illegal then a failure has occurred.
- Verifying that the current state of operating system parameters and other variables justify the execution of the job. For example, a command handler job should not execute unless the System-on-Chip is in the command processing mode.
- Verifying that the current state of operating system parameters and other variables justify certain accesses to different memory areas. For example, write access to code memory should not be authorized unless the System-on-Chip is in command processing mode under the system administrator.
- Verifying that fixed and known values located in RAM, ROM, and EEPROM memory can be read correctly. If known values cannot be read correctly one should not do anything critical.
- Verifying that the return addresses from interrupt handlers and functions have legal values, e.g. that they are within legal ranges.
- Verifying that the time spent on executing a program is within a legal range, based on values read from a clock cycle counter. For example, a spy-safe decryption code will take a fixed number of cycles to execute. Therefore, if the execution cycle count of said code is not as predicted, then a failure has occurred during that decryption.
- Verifying sensor flags to make sure that the System-on-Chip is operating within its design envelope. Some of the conditions hardware sensors may detect,include but are not limited to a) voltage too high, b) voltage too low, c) clock frequency too high, d) clock frequency too low, e) light present on chip, f) temperature too high, g) temperature is too low. Hardware sensors are often the only built-in security mechanisms in a secure chip, and these sensors shall be checked to be okay at random intervals, regular intervals (e.g. every millisecond), and before and during all critical operations. Experience has shown, however, that these sensors are not capable of detecting all failures.
- Verifying that a checkpoint counter has the correct value. A checkpoint counter is typically set to a predetermined value at the beginning of a program, and is thereafter verified and modified at several places in the program, said places having the characteristic that they must be "visited" in a certain order. If the checkpoints are not "visited" in the correct order then a failure has occurred.

In a preferred embodiment of the patent, the secure chip's illegal operation detection mechanisms are tested. The illegal operation detectors usually include but are not limited to illegal opcode detection and illegal memory access detection. In many secure chips the illegal operation detections put the chip in a locked state, requiring a hardware reset. This means that illegal opcode detections cannot be tested continuously, because they upset the normal operation of the chip. However, during personalization and at regular intervals (e.g. once per day) such tests can advantageously be performed. To do these tests, non-volatile memory based state machine variables are used, said variables being able to retain information during resets, thereby allowing the test procedure to include one or more resets.

In a preferred embodiment of the patent the secure chip is disabled, crippled, locked or killed if it deems itself to be unsuited for continued operation.

In a preferred embodiment of the patent, all executable memory areas of the operating system are checked to contain no dangerous sequences. A dangerous sequence is a sequence of values starting at a location which is not an instruction address of the operating system, but which can cause damages or security breaches if execution control for whatever reason is transferred to said location (i.e. the CPU's program counter is set to point at said location).

Dangerous sequences usually coincide with instruction operands, data areas, or unused padded memory. For example, cryptographic keys may contain dangerous sequences if placed in executable memory. The dangerous sequences are usually highly dependent on the architecture of the CPU and its peripherals. Typical dangerous sequences include code which can trigger updates of non-volatile memories, cause I/O operations, and reconfigure the memory management unit. A System-on-Chip will typically have a few dozens dangerous sequences that should be avoided.

The checking for absence of dangerous sequences will usually be done as a part of operating system development, but in addition the operating system may dynamically scan all arrivals of new code and data for dangerous sequences, i.e. operating much like a virus protection system in a personal computer.

The invention will be better understood thanks to the following detailed description which refers to the attached drawings which are given as a not limitative example, in which:
- figure 1 shows the known job's execution of a process,
- figure 2 shows the job's execution according to an embodiment of the invention.

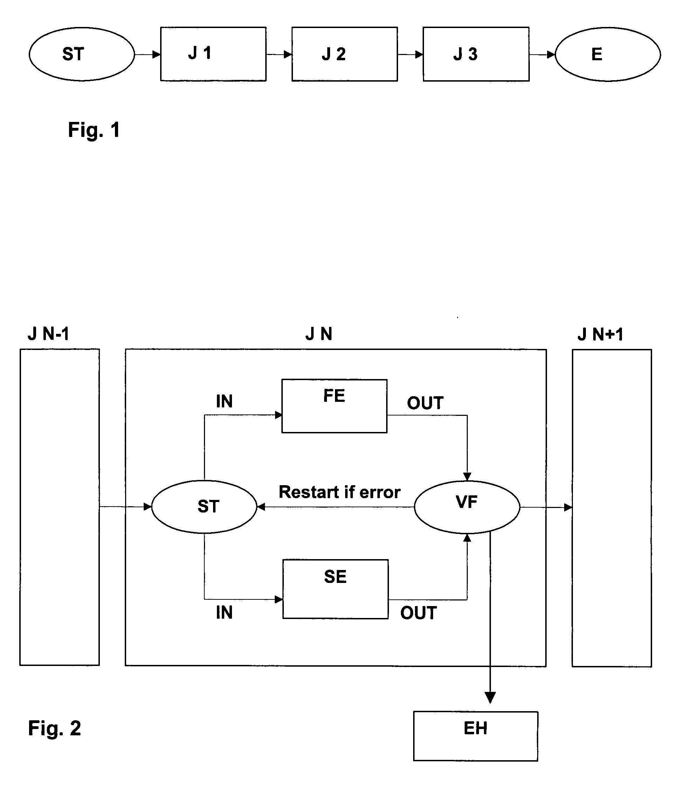

As already explained, a process consists of a set of jobs which are executed sequentially, each job being dependent on the result of the preceding job. The figure 1 shows a process having 3 jobs, from the start ST to the end E. These jobs J1, J2, J3 are executed sequentially. If the job J2 is not executed properly, the input data of the job J3 will not be correct as well as the final result.

In the figure 2, the job J N-1 delivers the input data for the job J N. In this case, the job J N-1 can be either a safe job, i.e., no repetition is necessary, or can be a repeated job.

The job J N starts with input data IN and should produce the expected output data OUT.

The same input data IN are given to at least two jobs JN FE (first execution job) and JN SE (second execution job) which should produce an equivalent result. These jobs can be launched in parallel or executed sequentially. The result of each job is compared in the verification block VF and the jobs JN FE and JN SE are repeated until the results are equivalent.

The verification bloc VF comprises a counter to limit the number of repetitions. In case of the maximum number of retries is reached, the execution is stopped and a module exception handler EH is then requested. This module decides the subsequent actions, e.g., a total reset of the microprocessor, a restart of the sequence of jobs (J N-1, J N, J N+1) or a disabling of the chip.

The present invention is not limited to small sized system-on-chip, it can for example also be embodied in a personal computer in which the operating system will work as described above. The process is divided into jobs for which, a status defines whether it should be repeated or only executed once.

## Claims

1. System-on-Chip with microprocessor (MbSoC) comprising an operating system designed to execute jobs in a sequential manner, each job having a set of input data and output data, **characterized in that**, it comprises means to repeat jobs at least twice for each set of input data, and comparison means to validate the results from repeated jobs by checking the output data for equivalency, and means to continue the execution in case of successful comparison, and means to launch of an exception handler in case of unsuccessful comparison.

2. System-on-Chip according to claim 1, **characterized in that**, the comparison is performed during the execution of the next job, i.e. the job following the repeated jobs.

3. System-on-Chip according to claim 1 or 2, **characterized in that**, the means to repeat jobs are designed to launch different programs producing equivalent results.

4. System-on-Chip according to claim 1 to 3, **characterized in that**, it comprises means to execute safe jobs only once, said safe jobs informing the operating system whether the result is valid or not.

5. System-on-Chip according to claim 1 to 3, **characterized in that**, the means to repeat jobs are designed to repeat the jobs more than twice for additional security.

6. System-on-Chip according to claim 1 or 2 designed to execute a first and a second job in a sequential manner, **characterized in that**, the second job has the reverse function of the first job, said second job using the result from said first job as input, and **in that**, the comparison means compare the input of said first job with the output of said second job.

7. System-on-Chip according to claim 1 to 6, **characterized in that**, it comprises means to check during the execution of a job, one or more storage cells to have an predetermined value, said checking being done at one or more places in the program code, and where unsuccessful checking is reported to the exception handler.

8. System-on-Chip according to claim 7, **characterized in that**, the checked storage cells are return addresses and/or other data on the stack, and where checking is performed before using said return addresses and/or other data.

9. System-on-Chip according to claim 7, **characterized in that**, the successful checking of the storage cells entails the modification of these cells to a further predetermined value.

10. System-on-Chip according to claims 7 to 9, **characterized in that**, the storage cells are defined as a timer register or a clock cycle counter to advance according to certain criteria, said checking being done at one or more places in the program code, and where successful checking indicates no failures and that job execution may continue, and where unsuccessful checking is reported to the exception handler.

11. System-on-Chip according to claim 1 to 6, **characterized in that**, it comprises control means which check sensor flags during the execution of a job, said checking being done at one or more places in the program code, and where successful checking indicates no failures and that job execution may continue, and where unsuccessful checking is reported to the exception handler.

12. System-on-Chip according to claims 1 to 6 **characterized in that**, the control means check during the execution of a job, accesses to different memory areas to be legal for the current operating mode, said checking being done at one or more places in the program code, and where successful checking indicates no failures and that job execution may continue, and where unsuccessful checking is reported to the exception handler.

13. System-on-Chip according to claims 1 to 6, **characterized in that**, the control means check the illegal operation detectors that lock the chip in case of illegal operation detection, and **in that**, the state machine variables controlling said tests reside in programmable non-volatile memory.

14. System-on-Chip according to one of the preceding claims, **characterized in that**, the job creates a signature on the output data, and that, the comparison means compare the signature of the repeated jobs.

15. System-on-Chip according to one of the preceding claims, **characterized in that**, the exception handler includes means to store logging of failures in non-volatile memory for discretionary use, including reliability statistics and anti-hacking countermeasures.

16. System-on-Chip according to one of the preceding claims, **characterized in that**, the exception handler comprises means to retry the unsuccessful job until a valid result has been obtained, up to a specified maximum number of retries.

17. System-on-Chip according to one of the preceding claims, **characterized in that**, the exception handling includes a microprocessor reset, said reset being generated internally by the microprocessor itself, or being requested explicitly to circuits external to the System-on-Chip, or requested implicitly by locking the System-on-Chip.

18. System-on-Chip according to one of the preceding claims, where the System-on-Chip is disabled, crippled or killed in case a dangerous non-intermittent failure condition is detected, and in that said disabling, crippling or killing includes modifying all or parts of non-volatile memory.

19. System-on-Chip according to the preceding claims, **characterized in that**, it comprises means to scan the executable memory in order to determine dangerous sequences, i.e., sequences that can cause damages or security breaches if executed, and **in that**, it further comprises means to erase or modify such sequences or to issue a warning message to a system administrator.

20. System-on-Chip according to the preceding claims, **characterized in that**, it comprises means to scan downloaded code and data in order to detect dangerous sequences, i.e., sequences that can cause damages or security breaches if executed, and **in that**, it further comprises means to erase or modify such sequences or to issue a warning message to a system administrator.
